# EUROPEAN PATENT APPLICATION

(11) **EP 3 396 448 A1**
(43) Date of publication of application: **31.10.2018**
(21) Application number: 17382237.0
(22) Date of filing: 28.04.2017
(51) Int. Cl.: G02F 2/00, G02F 1/39

(54) **OPTICAL PARAMETRIC OSCILLATOR FOR GENERATING AN OPTICAL FREQUENCY COMB**

(71) Applicant: Fundació Institut de Ciències Fotòniques, 08860 Castelldefels (Barcelona) (ES); Institució Catalana De Recerca I Estudis Avançats (ICREA), 08010 Barcelona (ES)
(72) Inventor: EBRAHIM, ZADEH, Majid, 08860 Castelldefels, Barcelona (ES); DEAVI, Kavita, 08860 Castelldefels, Barcelona (ES); KUMAR, Suddapalli Chaitanya, 08860 Castelldefels, Barcelona (ES)
(74) Representative: Stratagem IPM Limited

(57) **Abstract**

An optical parametric oscillator, OPO, for generating an optical frequency comb is described. The OPO is configured to control cavity dispersion such that the OPO is able to generate extended signal and/or idler spectra in response to a continuous-wave pump. Each spectrum comprises multiple modes that are substantially equispaced with substantially the same frequency spacing.

## Description

### Field

The application relates, for example, to an optical parametric oscillator for generating an optical frequency comb.

### Background

The generation of coherent broadband radiation with a discrete frequency spectrum in different wavelength regions is of great interest for a variety of applications, in particular for the development of optical frequency combs (OFCs) (see, for example, T. W. Hänsch, "Nobel lecture: Passion for precision," Rev. Mod. Phys. 78, 1297 (2006)).

Established techniques for OFC generation are based on the direct use of ultrafast mode-locked oscillators such as Ti:sapphire and fibre lasers or their combination with photonic fibres, or the use of microresonators pumped by mode-locked or continuous-wave (CW) lasers. Some established techniques are described below.

### Femtosecond Laser Oscillators

A common technique for the generation of OFCs is based on the use of a mode-locked ultrafast laser (see, for example, D. J. Jones et al., Science 288, 635 (2000)).

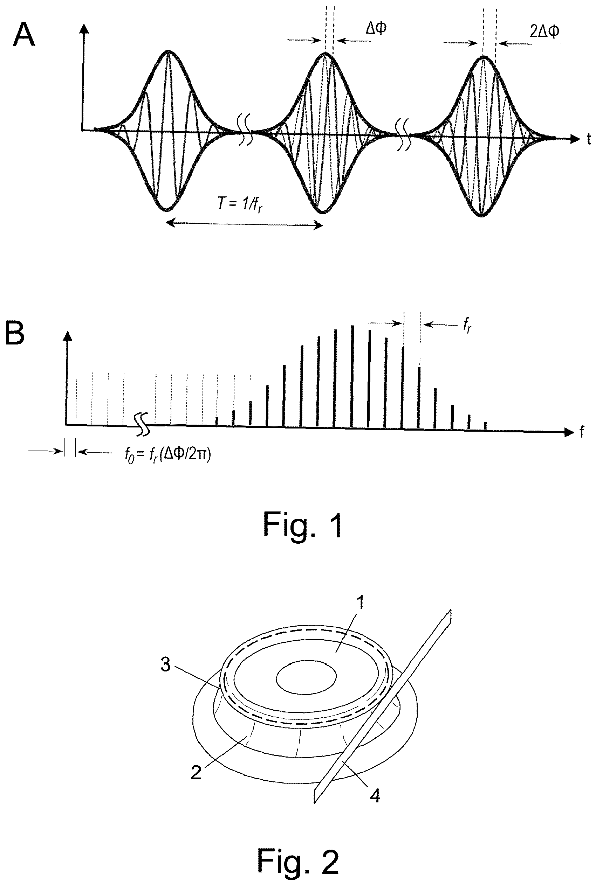

Referring to Figures 1A and 1B, the output of such a laser in the time domain consists of a periodic train of femtosecond pulses at a repetition rate, *fᵣ*, determined by the round-trip time of the laser cavity, *T*, where *fᵣ*=1/*T*. In the frequency domain, the output spectrum can be described as a comb of equidistant longitudinal modes separated by the pulse repetition rate, *f*ᵣ. The frequency of the *n*^{th} mode in the output spectrum can be defined by the formula, *fₙ* = *f*₀+*n*.*fᵣ,* where *f*₀ is the carrier-envelope offset frequency. Therefore, determining the absolute optical frequencies of the comb requires measurements of *fᵣ* and *f*₀, which are both in the radio frequency range. It thus also follows that if the parameters, *fₙ, n,fᵣ"* and *f*₀ are measured and controlled, the output of such a laser can be used as a "ruler" for precise measurement of optical frequencies over a broad spectral range, even linking optical to radio and microwave frequencies. The physical origin of *f*₀ lies in the difference between group and phase velocities inside the laser cavity, which in the time domain is manifested in the slippage of phase between the carrier and the envelope from pulse to pulse, as illustrated in Figure 1A. *f*₀ is related to the phase slippage, Δφ, by *f*₀= *f*ᵣ(Δφ/2Δ).

Determination and control of *f*₀ is key to calibrating and stabilizing the OFC for accurate frequency measurements.

One method is to lock the frequency comb to highly stabilized continuous-wave (CW) single-mode lasers of known optical frequency. However, this technique is not straightforward to implement because of the large gap between optical and radio frequencies (*fᵣ*), and the uncertainty in the frequency precision of the CW laser itself.

A generally better approach, known as self-referencing (*f-*2*f*)*,* relies on the comb itself. It is based on frequency-doubling a component of the comb spectrum (*fₙ* to 2*fₙ*), and then heterodyning it with an existing component at twice the frequency (*f₂ₙ*). The heterodyne signal, *2fₙ-f₂ₙ*=2(*f*₀+*n.fᵣ*)*-*(*f*₀+*2n.fᵣ)*=*f*₀*,* thus determines *f*₀. For the implementation of this technique, however, it is necessary for the comb spectrum to span at least one octave (i.e. from *n*^{th} to 2*n*^{th} modes). This is made possible by direct external spectral expansion of the output of the femtosecond laser oscillators in highly nonlinear, microstructure, or photonic crystal fibres.

Using a variety of modelocked femtosecond lasers, e.g. a Kerr-lens modelocked (KLM) Ti:sapphire laser, in combination with this approach, self-referenced octave-spanning OFCs within the ∼500-2000 nm range have been demonstrated at repetition rates of ∼75 MHz to ∼10 GHz with average powers of 100 mW to 1 W. Moreover, spectral extension of OFCs to new regions in the UV and near-IR to mid-IR has also been achieved by deploying nonlinear techniques such as cavity-enhanced harmonic generation, and synchronously pumped optical parametric oscillators (SPOPOs) using femtosecond lasers.

However, the generation of OFCs in different spectral regions using the methods described above requires sophisticated system architectures involving e.g. femtosecond lasers, specially-designed fibres and SPOPOs, with the associated limitations of complexity, high power consumption, and cost.

### Kerr Microresonators

Referring to Figure 2, a second approach to the generation of OFCs is based on the use of ultrahigh-Q monolithic optical microcavities (see, for example, K. J. Vahala, Nature 424, 839 (2002)). Such structures, typically a few tens of µm in size, can be fabricated from a variety of crystalline materials, such as quartz, CaF₂, silica, semiconductor, polymer, fibre, or photonic crystals, and in different resonance geometries, including Fabry-Perot micro-pillar waveguides, and whispering-gallery microrings, microdisks, microspheres and microtoroids. Of the different architectures, the silica microtoroid 1, as illustrated in the figure, has proved to be a particularly effective structure for OFC generation. The figure illustrates the silica microtoroid 1, a post 2, an optical wave 3, and an tapered fibre input/output 4. Because of the strong confinement of light due to the small size, long photon lifetime, and ultrahigh Q (>10⁸) attainable in such resonators, even for very small coupled CW input pump powers (µW to mW), large Kerr nonlinearities can be induced to enable OFC generation. A CW input pump and an OFC output are coupled in and out of e.g. the microtoroid 1 using tapered or angle-cleaved fibres 4, or prism coupling. These so-called Kerr combs or microcombs offer the advantages of very low CW pump power requirement and miniature design for on-chip integration. Because of the small microresonator dimensions, Kerr microcombs are also characterized by large inter-mode spacing of typically >10 GHz, making them particularly useful for applications such as waveform synthesis and calibration of astronomical spectrographs.

A silica microtoroid 1, on a post 2, with an optical wave 3, and an tapered fibre input/output 4.

The process of comb generation in microresonators exploits the high circulating intensities that can be built up in such structures, by strong spatial confinement and long photon lifetime, to achieve spectral expansion of the output through χ⁽³⁾ Kerr nonlinearity using cascaded four-wave mixing (FWM).

Dispersion is a key factor inhibiting the maximum spectral expansion in Kerr OFCs, so that the attainment of spectrally-broad microcombs requires careful control of material and structural dispersion using intricate dispersion engineering. This is currently a major focus of research activity in Kerr microcombs, in order to achieve octave-spanning self-referenced OFCs in different spectral regions, with control of comb stability and bandwidth remaining important challenges. It remains the case that the development of OFCs using Kerr microcavities requires sophisticated growth and fabrication techniques in large, dedicated facilities, with careful process control and optimization, to achieve the required material and geometrical dispersion. Moreover, the entire fabrication process predetermines the outcome of OFC generation a priori, so that little or no control over the microcomb characteristics with regard to spectral bandwidth, comb spacing, optical loss, efficiency, threshold, and output power is available post-fabrication.

While the techniques described above have revolutionized OFC technology, enabling unprecedented advances in precision metrology and spectroscopy, it remains the case that these techniques rely on complex and costly ultrafast oscillators or sophisticated microfabrication facilities, restricting OFC technology to only a few laboratories around the world. It would be desirable to explore potential new approaches to OFC generation that would offer lower complexity and cost, thus making OFC technology more readily available to other researchers worldwide for continually evolving new and future applications.

### Summary

According to a first aspect of the present invention, there is provided an optical parametric oscillator, OPO, for generating an optical frequency comb, wherein the OPO is configured to control cavity dispersion such that the OPO is able to generate extended signal and/or idler spectra in response to a continuous-wave pump, each spectrum comprising multiple modes that are substantially equispaced with substantially the same frequency spacing.

Thus, the invention aims to solve at least some of the abovedescribed problems.

The OPO is preferably a doubly-resonant oscillator able to generate extended signal and idler spectra.

The OPO is preferably able to generate the spectra in response to a single-mode pump.

The OPO may comprise one or more dispersion control elements. The dispersion control elements may be configured to cause a group delay dispersion that partly or fully compensates for the group delay dispersion otherwise caused by the optical cavity. The net group delay dispersion in the optical cavity is sufficiently near zero throughout the spectral coverage of the spectra.

The dispersion control elements may comprise one or more dispersive mirrors, particularly chirped mirrors. The dispersion control elements may comprise at least one pair of dispersive mirrors configured such that there are multiple successive bounces between the mirrors in the pair.

The dispersion control elements may comprise at least one fine adjustment element configured to cause a group delay dispersion that is adjustable without misaligning the optical cavity. The fine adjustment element may comprise a pair of wedges.

The frequency spacing may be c/2L for a standing wave cavity or c/L for a travelling wave cavity, wherein c is the speed of light in vacuum and L is the optical cavity length. The frequency spacing may be selected for one or more particular applications of the optical frequency comb. The frequency spacing may be controllable by at least changing the optical cavity length.

The spectral coverage of the spectra may be selected for one or more particular applications of the optical frequency comb. The spectral coverage of the spectra may be controllable by at least changing the phase-matching conditions. The spectral coverage of the spectra may be selected from some or all of the transparency range of the nonlinear optical element of the OPO.

The frequency spacing may be selected from the range 75 MHz-3 GHz. The spectral coverage before any frequency conversion may include 600 and/or 12,000 nanometres.

The spectra may be degenerate or non-degenerate. The bandwidth of each spectrum and/or the frequency separation between the spectra may be such that the spectra comprise at least one pair of linked signal and idler modes separated by substantially one or more octaves, thereby facilitating a self-referencing or similar technique.

The spectra may be degenerate or near-degenerate and each spectrum has a bandwidth that is substantially the same as the phase-matching bandwidth of the nonlinear optical element of the OPO.

The spectra may be degenerate or near-degenerate and each spectrum has a bandwidth of at least 1,000 nanometres.

The bandwidth of at least one spectrum may be expanded using a chirped quasi-phase-matching (QPM) grating and/or a higher-order nonlinear process.

The nonlinear optical element of the OPO at a phase-matching condition that substantially maximises the phase-matching bandwidth and/or substantially minimises the group velocity dispersion of the nonlinear optical element.

The OPO may have a generation threshold in the range 10-2,000 milliwatts. The OPO may have an output power of at least 10 milliwatts.

The spectra may be degenerate and self-phase-locking between the signal and idler may enable passive stabilisation of the spectra.

According to a further aspect of the present invention, there is provided a method of operating the OPO, the method comprising using a known or measured pump frequency and a measured frequency of a mode of one of the spectra to exactly determine the frequency of a linked mode of the other of the spectra.

There may be provided a system comprising the OPO aand apparatus configured to process at least part of the spectra to generate the optical frequency comb.

### Brief Description of the Drawings

Certain embodiments of the present invention will now be described, by way of example only, with reference to the accompanying drawings in which:
Figure 1 illustrates a (time-domain) pulse train output (A) and corresponding (frequency domain) optical frequency comb (OFC) output (B) from a known femtosecond laser oscillator.
Figure 2 illustrates a known Kerr microresonator.
Figure 3 illustrates frequency selection in a continuous wave (CW) doubly resonant oscillator (DRO).
Figure 4 illustrates frequency selection in a CW DRO with dispersion control.
Figure 5 illustrates a generic design of a CW DRO with dispersion control, i.e. an OFC source.
Figure 6 illustrates a first specific example of an OFC source, which has a standing wave cavity.
Figure 7 illustrates a second specific example of an OFC source, which has a travelling wave cavity.
Figure 8 shows, for the OFC source of Figure 8, a variation of net cavity GDD (A), a generated optical spectrum (B) and a corresponding radio-frequency spectrum (C).
Figure 9 shows, for the OFC source of Figure 9, a variation of net cavity GDD (A), a generated optical spectrum (B) and a corresponding radio-frequency spectrum (C).
Figure 10A illustrates conversion of a CW single-frequency pump into signal and idler modes in a degenerate DRO.
Figure 10B illustrates a degenerate OFC generated by a CW DRO with dispersion control.
Figure 11A illustrates conversion of a CW single-frequency pump into signal and idler modes in a non-degenerate DRO.
Figure 11B illustrates a non-degenerate OFC generated by a CW DRO with dispersion control.
Figure 12 shows phase-matching conditions in various QPM and birefringent nonlinear materials resulting in large OFC bandwidths.

### Detailed Description of the Certain Embodiments

### Further background

### Optical Parametric Oscillator (OPO)

In its simplest form, an OPO consists of a χ⁽²⁾ nonlinear optical element ("crystal") enclosed by a pair of mirrors, as in a conventional laser. The crystal is irradiated by a pump laser (with frequency ωₚ), and the induced polarization leads to the downconversion of the pump into two new fields, signal (ωₛ) and idler (ωᵢ), via a three-wave parametric interaction mediated by χ⁽²⁾, and subject to energy conservation (ωₚ = ωₛ + ωᵢ) and phase-matching (Δ*k* = *k*ₚ *- kₛ - k*ᵢ *≈* 0, where *k*ₚ, *kₛ, kᵢ* are wavenumbers of the pump, signal and idler, respectively). The key feature of the OPO is that by varying the phase-match condition (*Δk* = 0) using changes in the angle, temperature, or grating period (in the case of quasi-phase-matching) of the nonlinear crystal, the signal/idler frequency pair (ωₛ, ωᵢ) can be differentially adjusted, while maintaining energy conservation, thus enabling tuneable coherent radiation over extended spectral regions to be generated at lower frequencies from a fixed pump frequency.

The OPO can be operated in different time-scales (continuous wave (CW), ns, ps, fs), and in different resonance configurations depending on whether the mirrors provide feedback at the signal or idler (or even the pump).

### Doubly Resonant Oscillator (DRO)

In a DRO configuration, both signal and idler waves are resonant in the (optical) cavity of the OPO, and so each wave can be an axial mode of the cavity.

An advantage of a DRO is that it exhibits ∼100-200 times lower threshold than an equivalent SRO in which only the signal or idler (but not both) is resonated. The pump power threshold for a CW DRO is typically 10's-100's of mW, while for an equivalent SRO it is generally several Watts. Therefore, CW DROs can be operated with widely available, low-power, laser pump sources.

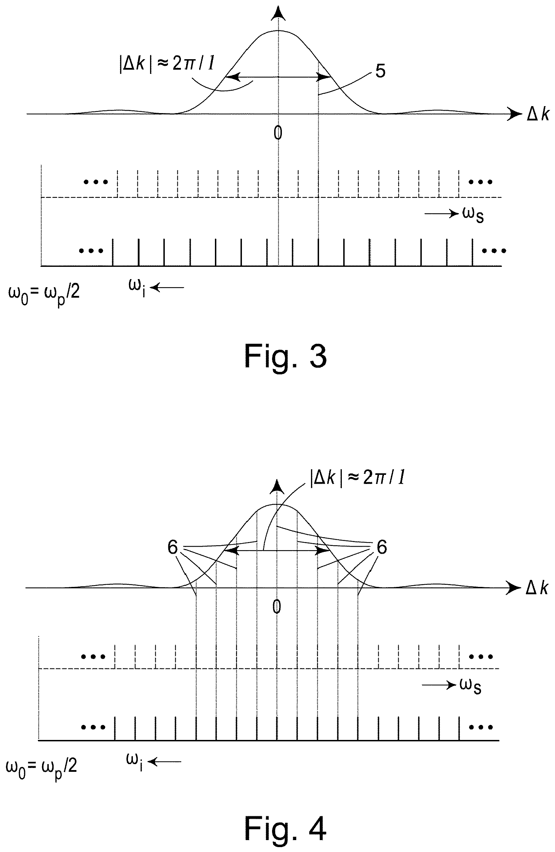

Referring to Figure 3, a disadvantage of the DRO, however, is that its output power and frequency can be subject to high instability, and it exhibits complex tuning characteristics. This arises from the need to resonate two optical fields (signal and idler), which are coupled through energy conservation, within a single cavity. The OPO can be described as over-constrained because the signal and idler must obey energy conservation (ωₚ = ωₛ + ωᵢ, i.e. ωₛ and ωᵢ are equidistant from the degenerate frequency ω₀= ωₚ/2) and, at the same time, each has to fulfil the resonance condition for the same cavity (*m*ₛωₛ = *c*/2*n*ₛ*L*; *m*ᵢωᵢ = *c*/*2n*ᵢ*L,* where *m*ₛ, *m*ᵢ are (integer) mode orders of the signal and idler, respectively, *c* is the speed of light in a vacuum, *ns, n*ᵢ are refractive indices of the cavity for the signal and idler, respectively, and *L* is the cavity length). Because of dispersion, the inter-mode spacing, both in the signal and idler mode spectra, varies with frequency across the phase-matching bandwidth (defined as Δ*k* = *k*ₚ *- kₛ - kᵢ -* 2π/*l*, where I is the crystal length). As such, it is only possible for a single signal-idler mode pair within the gain bandwidth to satisfy energy conservation and a resonance condition simultaneously. This is the so-called operating point 5 of the CW DRO. The effect may be referred to as a Vernier effect. Depending on the exact pump frequency and phase-matching conditions, there may exist more than one operating point, separated by "clusters" of modes, within the gain bandwidth. The net effect, however, is that in order to achieve stable operation in a DRO, the oscillator has to be locked onto a single signal-idler mode pair at the operating point 5. This also means that even very minor variations in the cavity length (∼few nm) can result in major perturbations in DRO output power and frequency. As such, practical operation of DROs generally requires active cavity stabilization and electronic feedback control. This requirement has traditionally restricted use of CW DROs in favour of CW SROs for many practical applications.

### OFC Generation

The inventors have recognized that the well-known and widely-accepted undesirable resonance features (as described above) of DROs can in fact bring about a surprising new property that makes DROs uniquely powerful for optical frequency comb (OFC) generation.

If a single-mode CW input pump laser is deployed for a DRO, then, under suitable conditions, each of the generated signal and idler fields can form a broad frequency spectrum, which will extend over the available gain bandwidth (Δk ∼ 2π/*l*). Since energy must be conserved (ωₚ = ωₛ + ωᵢ), under such conditions, the single-frequency input pump will be converted into broadband multimode signal and idler output spectra, each containing multiple axial modes separated by a frequency spacing, Δω = c/2*L*, where *L* is the length of the cavity ("cavity length"). In other words, under suitable conditions, the DRO has the ability to transfer a single-frequency input pump to a pair of broadband signal and idler frequency "combs". For each axial mode in the signal frequency spectrum, there exists an equivalent mode in the idler spectrum satisfying the energy conservation with the single-frequency input pump (ωₚ = ωₛ + ωᵢ). As explained below, the suitable condition under which this effect can be realized is the control of cavity dispersion ("dispersion control"), wherein cavity dispersion is the dispersion due to those elements that form or are included in the cavity (the crystal, mirrors, etc.)

Under dispersion control, the frequency selection behaviour of the DRO, as illustrated in Figure 3, is modified to that in Figure 4. As can be seen, dispersion control leads to a fixed axial mode spacing for both signal and idler across the OPO gain bandwidth. This enables operation of the DRO not only on a single signal-idler mode pair, but on multiple axial modes with equidistant spacing over a long range determined by the phase-matching gain bandwidth. In other words, it enables generation of an OFC.

It is known that, under synchronous pumping using mode-locked laser oscillators, femtosecond OPOs can provide broadband radiation in non-degenerate or degenerate operation, offering another approach to OFC generation. However, the requirement for mode-locked pump lasers (necessary to provide the input OFC), together with synchronous pumping, result in high complexity and cost. Broadband generation can also be achieved using CW OPOs by exploiting large parametric gain bandwidth or cascaded χ⁽²⁾ nonlinearity. However, both these techniques are strictly limited to specific phase-matching conditions and are not generic, with the cascaded χ⁽²⁾ effect also requiring an additional nonlinear crystal, resulting in increased threshold and added complexity. Active phase-modulation has also been used in a CW OPO for broadband generation, but this approach also results in higher complexity and cost, increased loss due to additional intracavity elements, and a cavity design and comb spacing determined strictly by the modulator frequency.

The present application describes a completely different and much more elegant approach, for example using CW single-mode lasers to directly pump compact CW DROs for broadband OFC generation.

### Dispersion Control

### Dispersion due to the Crystal

In CW OPOs, the main contribution to cavity dispersion is due to the crystal itself. For CW OPOs, long crystal lengths of *l* = 30-80 mm (e.g. MgO:sPPLT or MgO:PPLN) are generally used to reach the required oscillation thresholds. In the case of CW DROs, lower thresholds allow shorter crystal lengths of *l* = 5-30 mm to be deployed. The shorter crystal lengths in CW DROs result in lower material dispersion and thus more easily facilitate compensation of total cavity dispersion.

### Generic Design of a CW DRO with Dispersion Control

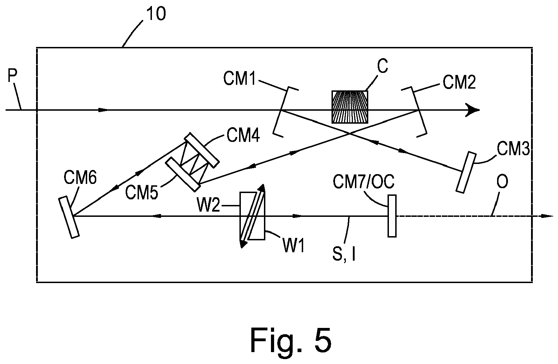

Referring to Figure 5, a generic design of a CW DRO with dispersion control 10 (an "OFC source") is shown.

The OFC source 10 seeks to achieve full cavity dispersion compensation. The OFC source 10 uses chirped mirrors CM1-CM7 for the DRO cavity to provide a negative group delay dispersion (GDD) to compensate for the total positive GDD in the cavity (mainly due to the crystal C). The CMs will provide a net negative GDD, where the total negative GDD presented to the cavity can be controlled by the number of bounces on the CMs using suitable cavity designs. Final fine adjustment of cavity dispersion to obtain net zero GDD can be achieved using a pair of antireflection-coated (AR-coated) wedges W1, W2 providing variable positive GDD with insertion/translation of suitable amount of material in the cavity, and without misalignment of the cavity.

As an example, a degenerate CW DRO based on MgO:sPPLT nonlinear crystal pumped at 532 nm can be considered. The crystal has a group velocity dispersion (GVD) of ∼196 fs²/mm at 1064 nm. This results in a total GDD contribution ranging from +1960 fs² for a 10-mm crystal to +5880 fs² for a 30-mm crystal. Current CM technology can provide negative GVD values of ∼-500 to ∼-1000 fs²/mm per bounce, so that even with a 30-mm crystal, a net negative GVD of ∼-300 fs² per round-trip of the DRO cavity will be readily attainable with 5 to10 reflections on the CMs. In combination with a pair of wedges W1, W2, for example SF11 glass (GVD ∼+120 fs²/mm at 1064 nm), the condition for net zero GDD in the DRO cavity can be precisely met, enabling OFC generation.

Similar calculations for other nonlinear crystals (e.g. MgO:PPPLN, OP-GaAs, OP-GaP, CdSiP₂, ZnGeP₂, etc.) and at other DRO operating wavelengths, also confirm that complete GDD compensation can be achieved generally.

Moreover, as will be explained below, specific phase-matching conditions that result in near-zero-GDD in the crystal can be used. This minimises the main contribution to the overall dispersion and hence further assists the task of dispersion compensation.

The chirped mirrors, wedges, etc. may be referred to as dispersion control elements.

Numerous variations may be made to the generic cavity design:
- For example, a combination of zero GDD and negative GDD mirrors may be used for the DRO cavity.
- The wedge pair W1, W2 may be omitted. In this case, the CMs may be selected to provide the exact amount of GDD.
- Other types of dispersion control element may be used. For example, any material, device or apparatus giving a positive or negative GDD may be used.
- The number of elements may be minimised, for example to minimise pump power threshold and/or maximise stability.
- One of the mirrors (e.g. CM3) may be mounted on a piezoelectric transducer.
- The cavity need not be a standing-wave cavity.
- Etc.

### Examples

### OFC sources

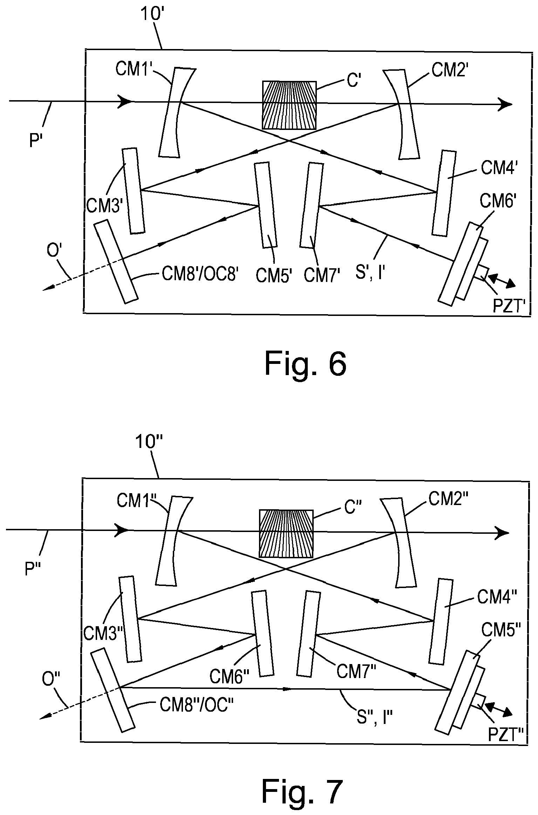

Referring to Figures 6 and 7, first and second (specific) examples of OFC sources 10', 10" are shown.

Each OFC source 10'/10" is pumped by a single-mode linearly-polarized CW solid-state laser (not shown) at 532 nm. Each OFC source 10'/10" comprises a nonlinear crystal C'/C", which is a 29-mm-long MgO:sPPLT with a fanned grating design (A = 7.8-9.5 µm) for type I (e→ee) interaction. The crystal coatings (and mirrors) allow degenerate operation at room temperature. The total single-pass cavity GDD, due to the crystal C'/C", amounts to +5684 fs² at 1064 nm. To overcome this, and achieve near-zero net cavity GDD, a combination of 8 chirped mirrors CM1'-CM8'/ CM1"-CM8" (wherein the eighth chirped mirror CM8'/ CM8" is an output coupler (OC)). In the first example, the OFC source 10' has a standing-wave cavity. In the second example, the OFC source 10" has a travelling-wave ring cavity. The cavity length is controlled using a piezo device PZT.

### Results

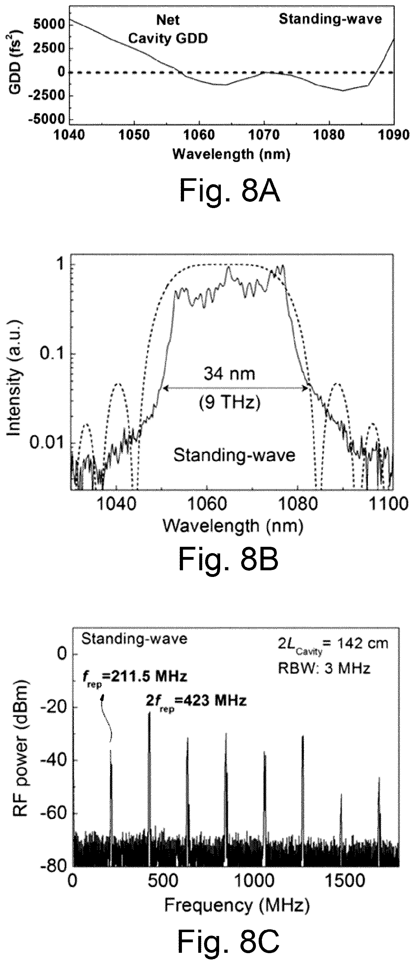

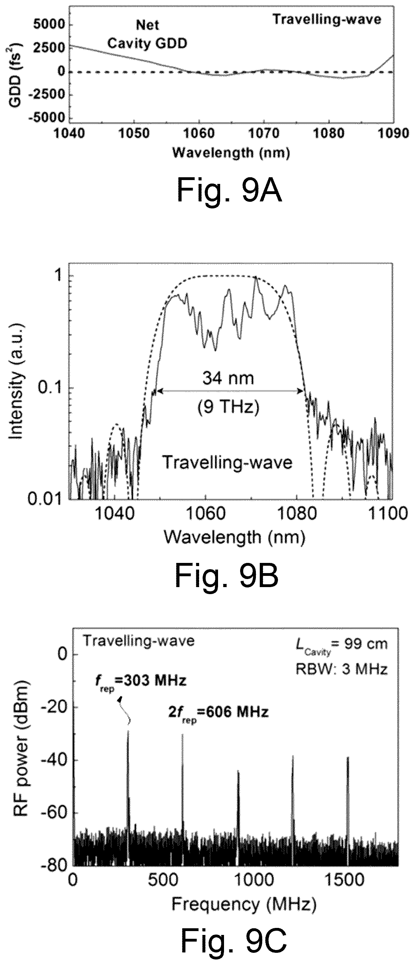

Referring to Figures 8A and 9A, the variations in net cavity GDD are shown for the first and second examples, respectively. The GDD data were determined from the data on OPO mirror coatings provided the mirror manufacturer.

Referring to Figures 8B and 9B, the resulting broadband spectra, are shown. The spectral data were obtained using a commercial spectrometer (Ocean Optics HR4000).

Referring to Figures 8C and 9C, the corresponding RF spectra are shown. The RF data were obtained using a commercial RF spectrum analyser (Agilent technologies EXA Signal analyser N9010A 10Hz-32GHz).

As can be seen, in both examples, broadband spectra are generated with a bandwidth of ∼9 THz and a frequency spacing corresponding to the free spectral range (FSR) of the DRO (which is 211.5 MHz for the first example and 303 MHz for the second example). Moreover, spectral generation occurs over nearly the full parametric gain bandwidth (shown by the dashed lines in Figures 8B and 9B), suggesting that further spectral expansion will be possible by using shorter crystals. The RF spectrum in each case confirms phase coherence in the generated optical spectra, representative of an OFC with a comb spacing determined by the cavity length. The pump power threshold for the first example is 810 mW and, for the second example, is 260 mW. A coherent broadband output power of 32 mW and 50 mW is available in the first and second examples, respectively, without optimization of output coupling.

### Further features

The generation of OFCs using CW DROs with dispersion control has some key further features:

### (a)

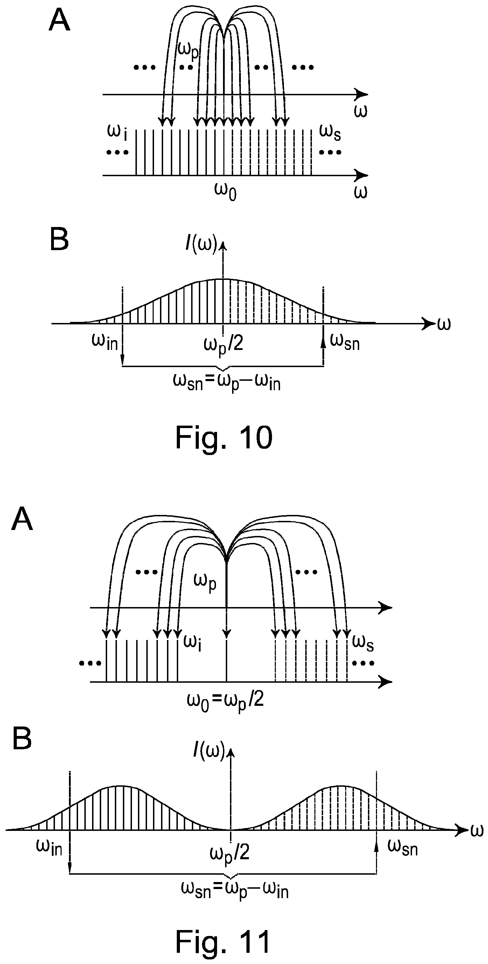

Referring to Figures 10 and 11, the OFC source 10 can be operated to produce a non-degenerate comb (see Figure 11) as well as a degenerate comb (see Figure 10). Either condition can be achieved by arbitrary control of phase-matching.

The non-degenerate comb comprises two OFCs (signal & idler) coupled by energy conservation (ωₚ - ωₛₙ - ωᵢₙ = 0). The spectral separation between the two combs can be arbitrarily controlled of phase-matching (Δ*k* = *kp - kₛ - k*ᵢ = 0).

This means that, unlike e.g. conventional combs based on femtosecond oscillators and Kerr microcombs, it is not vital to generate octave spanning combs for self-referencing. Instead, a phase-matching condition can be selected to provide signal and idler OFCs separated by a desired frequency difference in harmonics (e.g. *f-*2*f, f-*3*f*, *f-*4*f,* etc.). Then, using energy conservation, frequency calibration and self-referencing can be performed between the two OFCs in the different spectral regions.

This feature could provide yet another tool for the calibration and measurement of optical frequencies across extended spectral regions with arbitrarily large separations, limited only by the transparency range of the nonlinear crystal.

### (b)

Accurate measurements and calibration of optical frequencies within the comb can rely not only on the cavity resonances, as in conventional combs based on femtosecond oscillators and Kerr microcombs, but they can also exploit the strict energy conservation rule between individual signal and idler mode pairs. In particular, for each comb tooth (at ωₛₙ) in the signal spectrum, there exists a comb tooth in the idler spectrum (at ωᵢₙ = ωₚ - ωₛₙ) strictly obeying energy conservation. If the pump frequency is precisely known, then by measurement of one of the frequencies (either ωₛₙ or ωᵢₙ), the other frequency will be exactly determined by energy conservation.

### Characteristics of OFC sources

### OFC Threshold Power

The design of the DRO cavity for OFC generation may in some instances involve using CMs with multiple bounces, as well as an intracavity AR-coated wedge pair. In general, this would result in an increase in the threshold of any optical oscillator. However, as explained above, CW DROs exhibit intrinsically low oscillation thresholds (10's-100's of mW), and as such any increase in intracavity loss due to multiple reflections on CMs and insertion of the wedge pair will have minimal effect on the DRO performance. It is expected that with optimum design of the CM reflectivities and AR-coatings on the wedge pair, the increase in DRO threshold over the conventional GVD-uncompensated cavity will be no more than ∼20%. For example, using a CW DRO based on a 10-mm MgO:sPPLT crystal (*d*_{eff}∼9 pm/V), a threshold below ∼200 mW is expected with a dispersion-compensated cavity. With nonlinear materials of significantly higher nonlinearity, such as MgO:PPLN (*d*_{eff}∼16 pm/V), CdSiP₂ (*d*_{eff}∼84 pm/V), or OP-GaAs (*d*_{eff}∼94 pm/V), CW DRO thresholds of ∼20-100 mW are anticipated. Therefore, there should be no detrimental effect on OFC generation performance. Moreover, if necessary, under all condition, it should be possible to minimize the threshold by deploying longer nonlinear crystals, or using ring cavities.

### OFC Output Power

With the low CW DRO oscillation threshold of 10-200 mW, the generation of substantial OFC output power at high conversion efficiency should be readily attainable using widely available moderate-to-high-power CW laser pump sources. For a CW DRO in a standing-wave cavity, as in Figure 5, for a modest pump power of ∼1 W, the optimum pump-to-threshold ratio of 4:1 for a maximum conversion efficiency of 50% can be readily achieved by adjusting the output coupling, e.g. through mirror CM7. The total extracted power in the output O will depend on the overall parasitic losses in the cavity. However, with optimum design, extraction efficiencies close to the internal conversion of 50% can be expected, resulting in a total comb power of 200-400 mW for ∼1 W of input CW pump power.

With higher input powers of >1 W, it should be possible to increase the output coupling to achieve a CW DRO threshold 4x below the available pump power, and correspondingly enhance the output power. For example, with a 10 W input pump power, it should be possible to extract 2-4 W of total output power, while for a 30 W input pump power, output powers of >10 W should be attainable with threshold optimization. Output powers of >17 W in CW OPOs have already been achieved. This opens the possibilities for generating OFCs with Watt-level CW output power. If ring cavity designs are used, a conversion efficiency of 100% is attainable at 4x threshold, and similar strategies can equally be deployed to achieve maximum extraction efficiency and output power.

### OFC Spectral Coverage

An important factor in the realization of practical OFC sources is the flexible generation of combs in different spectral regions of interest, and with sufficiently large bandwidth. As explained above, a unique feature of CW DROs for OFC generation is the ability to provide degenerate combs and non-degenerate combs, which are linked by energy conservation (see Figure 11B). In each case, the desired spectral coverage of the signal and idler combs, and their separation in the non-degenerate case, can be tailored by phase-matching. In quasi-phase-matched (QPM) crystals (e.g. MgO:PPLN/sPPLT, OP-GaAs/GaP), where phase-matching is engineered by periodic poling, comb generation can in principle be achieved throughout the transparency range of the nonlinear material, which can span extended spectral regions (e.g. ∼1-5 µm in MgO:PPLN / MgO:sPPLT; ∼2-12 µm in OP-GaAs / ZnGeP₂ / CdSiP₂ / OP-GaP, etc.). Therefore, by suitable choice of the phase-matching condition, degenerate and non-degenerate OFCs can be provided in different spectral regions across the transparency range of the nonlinear crystal. This is a uniquely powerful feature of the proposed technique, which provides unprecedented spectral flexibility, enabling OFC generation potentially from ∼600 nm in the visible (using MgO:sPPLT) to ∼12 µm in the deep-IR (using OP-GaAs). With additional frequency up-conversion techniques such as second harmonic generation (SHG) internal or external to the DRO cavity, it should also be possible to extend the spectral coverage of OFCs towards shorter wavelengths into the ∼300-600 nm range.

### OFC Bandwidth

For both degenerate and non-degenerate OFCs, several strategies to maximize comb bandwidth have been identified:

### -(a)-

A uniquely powerful technique will be the exploitation of suitable phase-matching conditions to give the widest gain acceptance bandwidth, and hence the largest comb bandwidths.

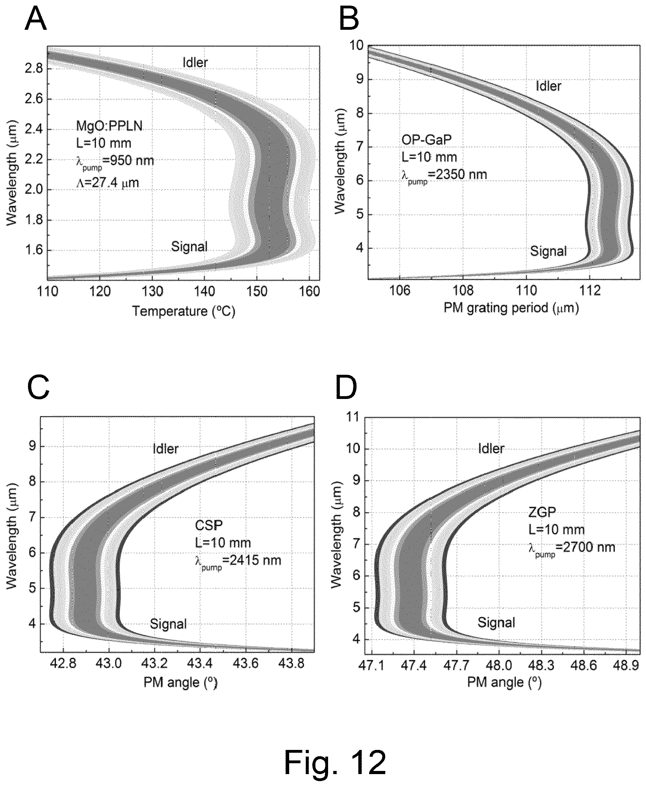

Referring to Figure 12, a few examples of phase-matching conditions for various QPM and birefringent nonlinear crystals are shown. All conditions correspond to Type 0 (e→ee; o→oo) interactions in QPM materials and Type I (e→oo; o→ee) interactions in birefringent crystals, ensuring identical output polarizations for the generated signal and idler. The greyscale corresponds to phase-matching bandwidth calculated over -π < *Δk.l* < π.

In any given phase-matching scheme, operation of the CW DRO in degenerate or non-degenerate regime will be achieved using mirrors with suitable reflectivity and dispersion characteristics across the respective signal and idler wavelength bands.

By deploying such geometries, it should be possible to develop CW DROs in degenerate operation with extended output bandwidths from >1000 nm in MgO:PPLN (across ∼1500-2500 nm), to >3000 nm in OP-GaP (across ∼4000-7000 nm), to as wide as >4000 nm in ZGP (over 4000-8000 nm, octave-spanning). Such phase-matching geometries have already been exploited in different contexts, e.g. in CW SROs for broadband pumping, and in femtosecond SROs for static broadband second harmonic generation (SHG), broadband rapid tuning, and broadband mid-IR idler generation. Such geometries can be deployed in CW DROs for generating broadband OFCs.

For non-degenerate OFCs, bandwidths of ∼200-500 nm (signal) and ∼500-1000 nm (idler) should be attainable, depending on the desired separation of the two combs, the specific phase-matching conditions and the nonlinear material (of the crystal). However, as will be explained below, the attainment of the largest bandwidth will not be as critical for non-degenerate OFCs, since suitable tailoring of signal and idler comb separation using phase-matching, together with the energy conservation condition linking the two combs, can provide an effective tool for measurement and calibration of optical frequencies between the two OFCs.

Importantly, the phase-matching conditions that result in the largest parametric gain bandwidth (see Figure 12) and hence the widest comb bandwidths in the frequency domain, also intrinsically correspond to the conditions for (near-)zero-GVD for the nonlinear material in the time domain. This means that the preferred phase-matching conditions not only result in maximum comb bandwidth, but also greatly benefit the task of GDD compensation.

### -(b)-

Other strategies for enhanced comb bandwidth generation include, for example, use of chirped gratings in periodically-poled QPM materials. It is known that the exploitation of chirped gratings in such crystals can modify parametric gain lineshape, thereby enabling the generation of output signal and idler combs with tailored bandwidths. While this approach can generally lead to a reduction in the overall parametric gain in CW operation, this will not be detrimental for OFC generation, because of the low oscillation threshold of ∼20-200 mW of the CW DROs described herein. For example, an increase of ∼200% in threshold to ∼40-400 mW can be readily accommodated by using low-to-moderate pump powers of ∼1-2 W. With higher pump powers, even larger reductions in gain can be tolerated.

### -(c)-

In addition to phase-match tailoring using birefringent and uniform grating QPM materials (see Figure 12), or chirped QPM gratings, other techniques for enhancing comb bandwidth may also be used if necessary. These could include the use of additional nonlinear elements such as highly nonlinear (HNL) fibres or materials with large χ⁽³⁾ nonlinearity in the cavity to assist bandwidth generation through cascaded FWM, as in Kerr microcombs, or self-phase-modulation (SPM). Given the low CW DRO oscillation threshold, the insertion of additional nonlinear elements within the cavity should be possible without major decreases in performance. Using input pump powers of >10 W, large circulating powers of > 100 W will be available within the CW DRO cavity, enabling bandwidth enhancement of the circulating intracavity comb through χ⁽³⁾ FWM or CW supercontinuum generation in HNL fibres and photonic-crystal fibres (PCFs). With focusing to a beam radius of *w*₀∼20 µm in a highly nonlinear crystal (e.g. CdSiP₂, OP-GaAs, etc.) of moderate length (a few cm) inside the cavity, focused intensities of >8 MW/cm² can be achieved, also potentially enabling enhanced bandwidth generation through χ⁽³⁾ FWM and/or SPM. With increased input pump powers of up to 30 W, say, enhanced bandwidth generation will be even more readily attainable using this approach.

Spectral broadening of the comb bandwidth external to the cavity could also be carried out using longer lengths (metres) of HNL and PCF fibres.

Other techniques for enhancement of comb bandwidth could include the exploitation of cascaded χ⁽²⁾:χ⁽²⁾ processes using a second χ⁽²⁾ nonlinear crystal within the cavity. However, such cascaded χ⁽³⁾ and χ⁽²⁾:χ⁽²⁾ processes can generally lead to bandwidth generation without full control of comb spacing and bandwidth.

### OFC Repetition Rate

In OFCs based on Kerr microcavities, the comb repetition rate is determined a priori by the fabrication process, and pre-set at a fixed value. Because of the small (µm) dimensions of such microresonators, a given microcomb can provide a fixed repetition rate typically somewhere between ∼10 to >100 GHz. In OFCs based on femtosecond oscillators, the available repetition rates are also generally fixed for a given comb at ∼70-100 MHz, determined by the practical design of optimized laser cavities to achieve Kerr-lens or other mode-locking mechanisms for broadband ultrashort pulse generation. While femtosecond lasers at tens of GHz repetition rates have also been developed, nevertheless the repetition rate provided by a given mode-locked oscillator is generally fixed and modification to a significantly different repetition rate requires re-design of the laser cavity, which is often non-trivial. As such, both Kerr microcavities and femtosecond oscillators generally provide combs only at a fixed number of repetition rates, and the attainment of variable repetition rate from a single device is generally not feasible.

In contrast, the OFC sources 10 described herein offer the unique capability to generate OFCs with arbitrary and controllable repetition rates. In particular, the OFC source 10 will allow the generation of OFCs with continuously variable repetition rate by simple alteration of the cavity length, or at worst by readily achievable modifications to the cavity.

A wide variety of OPO systems from synchronously pumped ultrafast oscillators with repetition rates from 76 MHz to 7 GHz, to compact CW oscillators with inter-mode spacing up to ∼1 GHz have been developed in other contexts. Such oscillators can be readily operated at any desired cavity length (hence, repetition rate) by simple adjustment of pump focusing and cavity mode-matching using suitable pump focusing, mirror curvatures and mirror spacing. As such, OFCs with selectable repetition rate can be provided by simple changes to the cavity length and minor adjustments to mode matching. Specifically, using CW DRO cavity lengths from ∼2 m down to ∼50 mm (with shorter crystal lengths of e.g. 10-20 mm), repetition rates from ∼75 MHz up to ∼3 GHz can be achieved. Using longer cavities of >2 m, lower repetition rates down to ∼20 MHz can be achieved with little or no detriment to the oscillator performance given the inherently low CW DRO threshold. Moreover, with optimum design, the cavity length of the CW DRO can be readily varied during operation (over tens of cm) without compromise in performance, thus even enabling *in-situ* control and continuous tuning of the comb repetition rate. (With advances in photonic integration, an extension of the proposed concept to monolithic CW DROs in miniaturized waveguide structures can be envisioned, enabling OFC generation at repetition rates of 10's-100's of GHz, even ultimately under electrical injection with the pump laser on the same chip.)

### Summary

As explained above, CW DROs with dispersion control can have many advantages in relation to OFC generation. In particular, such OFC sources 10 can provide full control, unprecedented flexibility and advantageous operating conditions in relation to key parameters such as spectral coverage, bandwidth, repetition rate, threshold and output power:
(a) OFC wavelength coverage: 600 to 12,000 nm (extendable down to 300 nm), and with tailorable signal and idler comb separation in non-degenerate operation;
(b) OFC bandwidth: >1,000 to >4,000 nm in degenerate operation (extendable using chirped QPM gratings and/or additional nonlinear processes);
(c) OFC spacing / repetition rate: ∼75 MHz (or even down to ∼1 MHz) to ∼3 GHz (readily controllable and arbitrarily tuneable).
(d) OFC generation threshold: 10-2,000 mW; and
(e) OFC output power: >10 mW to >10 W.

As explained above, this performance is achieved using a relatively simple design and readily available CW lasers and bulk χ⁽²⁾ nonlinear materials, without the need for sophisticated and high-cost growth and fabrication facilities.

### Further Modifications and Developments

Several further modifications and developments are described below:

### Other examples

There are various suitable nonlinear materials and pump sources for broadband OFC generation in different spectral regions, as set out in Table 1 below. For a given nonlinear material and pump source, a desired mode of operation can be obtained by suitable design of the cavity mirror reflectivities, etc.

**Table 1. Other examples**

| # | *Modes* | *Spectral region* | *Suitable nonlinear materials* | *Suitable pump sources* |
|---|---|---|---|---|
| 1 | Degenerate | Visible to near-IR ∼700-2200 nm | QPM crystal: MgO:sPPLT | High-power CW frequency-doubled single-mode Yb-fiber laser at 532 nm (IPG Photonics, GLR-50) |
| | | | Birefringent crystals: BiB306 and LiB305 | |
| 2 | Degenerate | Near-IR to mid-IR ∼1500-3500 nm | QPM crystals: MgO:PPLN and OP-GaP | High-power CW single-mode Yb-fiber laser at ∼1.06 µm (IPG Photonics, YLR LP-SF) |
| | | | Birefringent crystal: CdSiP2 | |
| 3 | Degenerate | Mid-IR to deep-IR ∼3000-7000 nm | QPM crystal: OP-GaAs | Moderate-power CW single-mode Cr:ZnSe laser tuneable across 2000-2600 nm (IPG Photonics, SFTL Series 2300-1000) |
| | | | Birefringent crystals: CdSiP2 and ZnGeP2 | |
| 4 | Non-degenerate | Visible to near-IR | Same as #1 | Same as #1 |
| | | Signal: | | |
| | | ∼600-1100 nm | | |
| | | Idler: | | |
| | | ∼1100-4500 nm | | |
| 5 | Non-degenerate | Near-IR to mid-IR | Same as #2 | Same as #2 |
| | | Signal: | | |
| | | -1250-2100 nm | | |
| | | Idler: | | |
| | | ∼4000-7000 nm | | |
| 6 | Non-degenerate | Mid-IR to deep-IR | Same as #3 | Same as #3 |
| | | Signal: | | |
| | | ∼3000-5000 nm | | |
| | | Idler: -5000-12,000 nm | | |

### Passive Spectral and Power Stability, and Phase Locking

As demonstrated above, a condition for stable broadband emission is met when the cavity dispersion is tuned to achieve(near) zero overall GDD (see Figures 8 and 9). Under this condition, a stable coherent output spectrum is expected. In the degenerate case, the spectrum will be broadband and continuous with indistinguishable signal and idler under Type 0 (e→ee; o→oo) and Type I (e→oo; o→ee) interaction centered at degeneracy (see Figure 3). Indeed, an abrupt enhancement in passive spectral and power stability of the DRO is expected when a substantially zero overall GDD condition is established. Similar behavior has been observed in femtosecond OPOs. Under this condition, the CW DRO will operate on multiple signal and idler cavity modes and phase-locking of the modes will occur, resulting in coherent broadband emission. Similar phase-locking behavior has been theoretically predicted and observed in CW OPOs in a different context and under different resonance conditions.

### Output stabilization and OFC calibration

For output stabilization, servo-locking techniques may be used, such as comparing the high harmonic of the comb tooth spacing (repetition rate) with the output of a stable RF synthesizer or a stable Fabry-Perot cavity, and using a feedback loop to lock the CW DRO cavity length by mounting one of the mirrors (e.g. CM3 in Figure 5) on a piezoelectric transducer (PZT).

In the case of degenerate combs with octave-spanning spectrum, the self-referencing technique described above may be used. In case the comb bandwidth does not extend over an octave, heterodyne beat-note measurements between a stable single-mode laser and the comb may be used.

In the case of non-degenerate OFCs, *f-*2*f,* as well as *f-*3*f, f-*4*f,* or higher-order self-referencing techniques may be used, depending on the separation of the signal and idler combs. In cases where this may not be possible, beat-note measurements between a stable single-mode laser and the signal and/or idler OFCs may similarly be used.

### Time-domain studies and characterization

The generation of an OFC with phase-locked comb lines in spectral domain corresponds to the formation of a mode-locked ultrashort optical pulse train in time domain at a repetition rate equal to the comb frequency spacing (c.f. Figures 1A and 1B). Thus, the abovedescribed OFC sources 10 may be used to provide such pulses, which may have various applications.

### Singly Resonant Oscillator (SRO)

The key concept can also be extended to a singly-resonant oscillator (SRO), i.e. where only the signal (or the idler, but not both) are resonant in the cavity.

In the absence of dispersion control, typically only one resonant frequency nearest the peak of the parametric gain will oscillate in the cavity. The non-resonant idler (which is single-pass and free from cavity resonance constraint) will inherit the appropriate frequency to satisfy energy conservation with the input pump.

Under dispersion control, however, not just one, but many resonant modes can be simultaneously supported within the parametric gain bandwidth (above the loss level) for a given OPO cavity length, resulting in coherent multi-axial-mode signal oscillation. The non-resonant idler (which is single-pass and free from cavity resonance constraint) will similarly inherit a complimentary multi-axial-mode frequency spectrum to satisfy energy conservation with the input pump.

## Claims

1. An optical parametric oscillator, OPO, for generating an optical frequency comb, wherein the OPO is configured to control cavity dispersion such that the OPO is able to generate extended signal and/or idler spectra in response to a continuous-wave pump, each spectrum comprising multiple modes that are substantially equispaced with substantially the same frequency spacing.

2. An OPO according to claim 1, wherein the OPO is a doubly-resonant oscillator able to generate extended signal and idler spectra.

3. An OPO according to claim 1 or 2, comprising one or more dispersion control elements configured to cause a group delay dispersion that partly or fully compensates for the group delay dispersion otherwise caused by the optical cavity.

4. An OPO according to claim 3, wherein the net group delay dispersion in the optical cavity is sufficiently near zero throughout the spectral coverage of the spectra.

5. An OPO according to any claim 3 or 4, wherein the dispersion control elements comprise one or more dispersive mirrors, particularly chirped mirrors.

6. An OPO according to any one of claims 3 to 5, wherein the dispersion control elements comprise at least one fine adjustment element, optionally a pair of wedges, configured to cause a group delay dispersion that is adjustable without misaligning the optical cavity.

7. An OPO according to any preceding claim, wherein:
the frequency spacing is c/2L for a standing wave cavity or c/L for a travelling wave cavity, wherein c is the speed of light in vacuum and L is the optical cavity length; and/or
the frequency spacing is selected for one or more particular applications of the optical frequency comb; and/or
the frequency spacing is controllable by at least changing the optical cavity length.

8. An OPO according to any preceding claim, wherein:
the spectral coverage of the spectra is selected for one or more particular applications of the optical frequency comb; and/or
the spectral coverage of the spectra is controllable by at least changing the phase-matching conditions; and/or
spectral coverage of the spectra is selected from some or all of the transparency range of the nonlinear optical element of the OPO.

9. An OPO according to any one of claims 2 to 8 when dependent on claim 2, wherein the spectra are degenerate or non-degenerate, and the bandwidth of each spectrum and/or the frequency separation between the spectra is such that the spectra comprise at least one pair of linked signal and idler modes separated by substantially one or more octaves, thereby facilitating a self-referencing or similar technique.

10. An OPO according to any preceding claim, wherein the spectra are degenerate or near-degenerate, and each spectrum has a bandwidth that is substantially the same as the phase-matching bandwidth of the nonlinear optical element of the OPO.

11. An OPO according to any preceding claim, with a nonlinear optical element of the OPO at a phase-matching condition that substantially maximises the phase-matching bandwidth and/or substantially minimises the group velocity dispersion of the nonlinear optical element.

12. An OPO according to any preceding claim, wherein the spectra are degenerate and self-phase-locking between the signal and idler enables passive stabilisation of the spectra.

13. An OPO according to any preceding claim, wherein:
the spectral coverage before any frequency conversion includes 600 and/or 12,000 nanometres; and/or
the spectra are degenerate or near-degenerate and each spectrum has a bandwidth of at least 1,000 nanometres; and/or
frequency spacing is selected from the range 75 MHz-3 GHz; and/or
a generation threshold of the OPO is in the range 10-2,000 milliwatts; and/or
an output power of the OPO is at least 10 milliwatts.

14. A method of operating an OPO according to any one of claims 1 to 13, the method comprising using a known or measured pump frequency and a measured frequency of a mode of one of the spectra to exactly determine the frequency of a linked mode of the other of the spectra.

15. A system comprising an OPO according to any one of claims 1 to 13 and apparatus configured to process the optical frequency comb.
